# FASCICULE DE BREVET EUROPEEN

(11) **EP 1 273 825 B1**
(45) Date de publication et mention de la délivrance du brevet: **20.06.2007**
(21) Numéro de dépôt: 02291490.7
(22) Date de dépôt: 14.06.2002
(51) Int. Cl.: F16H 3/089, F16H 3/10

(54) **Boite de vitesses à arbres parallèles et procédé de commande des changements de rapport correspondants**
Getriebe mit parallelen Wellen und Verfahren zur Steuerung der Schaltungen
Gearbox with parallel shafts and method for controlling gear changes

(30) Priorité: 29.06.2001 FR 0108605
(43) Date de publication de la demande: 08.01.2003
(73) Titulaire: Renault s.a.s., 92100 Boulogne Billancourt (FR)
(72) Inventeur: Raoul, Michel, 78990 Elancourt (FR)

(56) Documents cités:
- WO-A-01/18425
- GB-A- 1 235 486
- US-A- 4 441 384

## Description

La présente invention se rapporte à une boîte de vitesses pour véhicule automobile à arbres parallèles .

Plus précisément, elle concerne une boîte de vitesses à arbres parallèles comprenant un arbre primaire et au moins un arbre secondaire supportant plusieurs dentures fixes et plusieurs pignons fous qui engrènent avec ces dernières et qui peuvent être liés en rotation avec leur arbre par des moyens d'accouplement lors de l'engagement d'une vitesse.

Cette invention trouve une application privilégiée, mais non limitative, sur une boîte de vitesses à arbres parallèles comportant cinq rapports de marche avant et un rapport de marche arrière.

Elle concerne également un procédé de commande des changements de rapport sous couple dans une boîte de vitesses à arbres parallèles.

La boîte peut comporter par exemple quatre descentes d'engrenages constituées d'un pignon fou et d'un pignon fixe, associées par groupe de deux à des moyens de couplage communs par anneaux de couplage à cônes de friction, et agencées de manière que les deux rapports commandés par chaque groupe de deux descentes ne soient pas de rang successif.

Pour faciliter la robotisation et le changement de rapports sous couple dans une boîte de vitesses à arbres parallèles, il est connu de grouper par deux les rapports ,et de prévoir que le passage d'un rapport de marche avant de rang n à un rapport de marche avant de rang n+1 s'effectue en désactivant le groupe de deux rapports comportant le rapport n, et en activant simultanément le groupe de deux rapports comportant le rapport n+1.

La publication US 5503 039 décrit à ce sujet une boîte de vitesses selon le préambule de la revendication 1 où chaque rapport est associé à un dispositif de synchronisation et où les pignons sont agencés de manière inhabituelle à celle que l'on rencontre dans une boîte de vitesses manuelle pour répondre aux exigences de la grille des vitesses conventionnelle. En effet, sont groupés en paire, d'une part les rapports de première et de troisième, et d'autre part les rapports de deuxième et de quatrième. Cette disposition, choisie pour la robotisation, permet d'actionner simultanément plusieurs synchroniseurs, de réduire le temps de changement de rapport qui ne peut se faire qu'avec l'ouverture de l'embrayage intercalé entre le moteur et la boîte de vitesses, c'est-à-dire avec rupture de couple.

La présente invention vise à réaliser des changements de rapport sous couple sans avoir besoin d'ouvrir et de fermer l'embrayage d'entrée d'une transmission mécanique, robotisée ou non.

Dans ce but, elle propose des moyens de couplage adaptés à chaque pignon fou selon son rang.

Conformément à l'invention les moyens d'accouplement d'au moins un pignon fou sont fixés à la périphérie d'une roue libre.

Selon un mode de réalisation particulier, ceux du pignon fou du premier rapport de marche avant sont fixés à la périphérie d'une roue libre.

De préférence, les pignons fous du premier rapport de marche avant et du rapport de marche arrière sont portés par un arbre secondaire.

Conformément à l'invention, l'engagement du premier rapport de marche avant et celui du rapport de marche arrière peuvent être commandés manuellement, tandis que l'engagement des autres rapports de marche avant est assuré par des actionneurs pilotés par une unité de contrôle des passages de vitesses.

Toutefois, sans sortir du cadre de l'invention, l'engagement de tous les rapports peut être assuré par des actionneurs pilotés par une unité de contrôle de passage des vitesses.

La présente invention sera mieux comprise à la lecture de la description suivante d'un mode de réalisation non limitatif de celle-ci, en liaison avec le dessin annexé, sur lequel ;
- la figure unique est une coupe longitudinale partielle d'un mécanisme de changement de rapport conforme à l'invention.

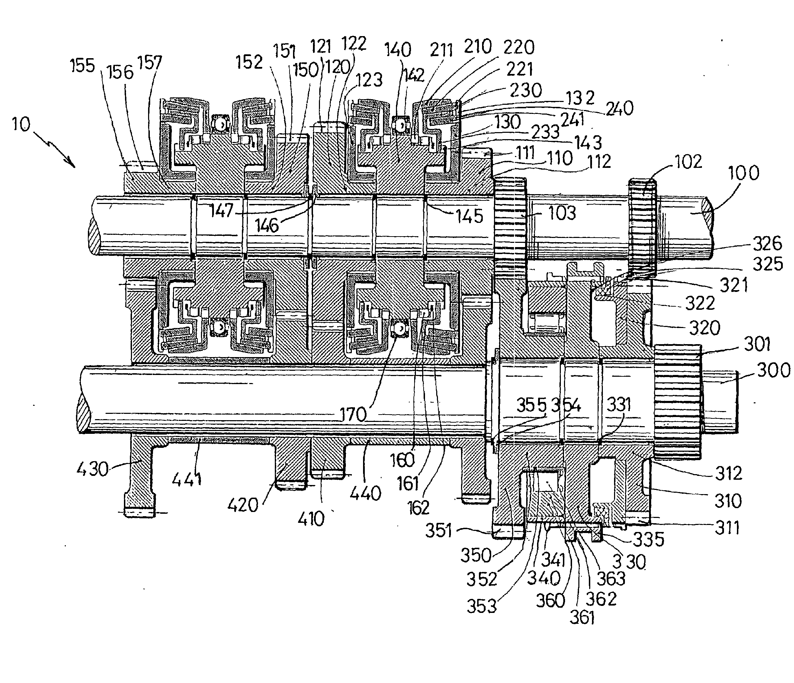

La boîte de vitesses 10 représentée sur la figure 1 comprend de façon classique, un arbre d'entrée dit arbre primaire 100 et un arbre intermédiaire dit arbre secondaire 200.

L'arbre primaire possède, de droite à gauche, une première denture fixe 102 du rapport de marche arrière, une deuxième denture fixe 103 du premier rapport de marche avant, et un premier groupe de rapports de marche avant constitué du pignon fou du troisième rapport de marche avant 110, composé d'une denture d'engrènement 111 d'un fût 112 et d'un flasque 130 rapporté sur cannelures, du pignon fou du cinquième rapport de marche avant 120, composé d'une denture d'engrènement 121, d'un fût 122 et d'un flasque 123 , rapporté sur cannelures.

Entre les deux pignons 110 et 120, sont intercalés un moyeu 140 lié en rotation à l'arbre primaire 100, et de part et d'autre de celui-ci, des moyens de couplage.

Dans le cadre de l'invention, les moyens d'accouplement des pignons fous sur leur arbre peuvent être de tout type, conventionnel ou non. A titre d'exemple non limitatif, les moyens d'accouplement du pignon de troisième 110 comprennent un anneau conique supérieur 210, deux anneaux coniques intermédiaires 220 et 230, et un anneau conique inférieur 240. Le flasque 130 rapporté sur le pignon 110 et solidaire en rotation avec celui-ci, possède à sa périphérie des évidements 132 destinés à assurer une liaison en rotation avec l'anneau intermédiaire 220 et l'anneau inférieur 240. Ces évidements coopèrent avec un nombre égal d'ergots de forme adaptée 221 pour l'anneau intermédiaire 220 et 241 pour l'anneau inférieur 240.

L'anneau supérieur 210 comporte un cône femelle coopérant avec un cône mâle du premier anneau intermédiaire 220. L'anneau supérieur 210 possède dans sa partie centrale des crans à flancs inclinés 211 d'entraînement avec le moyeu 140, qui transmettent la totalité du couple transitant dans cet anneau et permet, par leur inclinaison adaptée de transformer le couple en poussée axiale de l'anneau supérieur sur les autres anneaux. Le moyeu a une série d'évidements 142 de forme conjuguée aux dents de l'anneau supérieur.

L'anneau de couplage intermédiaire 220 possède un deuxième cône femelle en regard du cône mâle du deuxième anneau intermédiaire 230 ,et des ergots 221 pénétrant dans les évidements 132 du flasque 130. L'anneau 230 possède dans sa partie centrale des crans 233 à flancs parallèles d'entraînement avec le moyeu 140, qui transmettent la totalité du couple transitant dans cet anneau.

Le moyeu a une série d'évidements 143 de forme conjuguée aux dents 233 de l'anneau intermédiaire. Enfin, l'anneau inférieur 240, comme dit précédemment, possède une surface conique mâle en vis-à-vis de la surface conique femelle de l'anneau intermédiaire 230 et des ergots 241 de couplage avec le flasque 130 dont les faces de contact sont parallèles à l'axe de l'arbre 100. Les surfaces coniques en vis-à-vis ont le même angle.

De préférence, entre l'anneau inférieur 240 et l'anneau intermédiaire 230 d'une part et les anneaux intermédiaires 220 et 230 d'autre part, on choisira un angle donnant le plus de capacité en transmission de couple, et entre l'anneau supérieur 210 et l'anneau intermédiaire 220 un angle assurant le meilleur compromis entre le couple à transmettre et le taux conversion de couple en poussée axiale, autrement dit le taux d'assistance.

Le système d'accouplement non limitatif décrit ci-dessus comprend donc quatre anneaux indépendants qui participent en commun à la transmission globale du couple.

De façon classique, la mise en service du dispositif de couplage peut être est réalisée par le déplacement axial des anneaux et la mise en contact des surfaces coniques en vis-à-vis à l'aide d'un baladeur 170 de type roulement à billes ou à rouleaux dont le déplacement axial est obtenu par la mouvement axial d'une fourchette (non représentée) qui encercle le roulement. Cette fourchette est mise en mouvement par un dispositif de commande qui la met en liaison avec des moyens de poussée quelconque (non représentés).

Durant toute la phase de synchronisation et ensuite pendant la transmission du couple moteur, la poussée du baladeur doit être maintenue. C'est pourquoi le baladeur est du type roulement. Pour remettre au repos le dispositif il suffit d'annuler la poussée axiale du baladeur. Le dispositif de répulsion prend le relais pour le rendre amorphe. Ce dispositif est composé d'une rondelle ondulée 160 insérée entre deux rondelles plates 161, l'une prend appui sur le cône supérieur 210 et l'autre sur le moyeu par l'intermédiaire de l'anneau d'arrêt 162.

Le moyeu 140 est maintenu axialement sur l'arbre primaire 100 par les anneaux d'arrêt 145 et le pignon fou du rapport de cinquième est arrêté axialement à gauche par la rondelle 146 et l'anneau d'arrêt 147.

Par ailleurs, l'arbre primaire porte un deuxième groupe de rapports de marche avant constitué du pignon fou du quatrième rapport de marche avant 150, composé d'une denture d'engrènement 151 et d'un fût 152 , et du pignon fou du rapport de deuxième 155, composé d'une denture d'engrènement 156 et d'un fût 157. Entre ces deux pignons sont intercalés un ensemble composé d'un moyeu et de dispositifs de couplage en tout point similaire à ceux décrits précédemment.

L'arbre secondaire 300, de droite à gauche, a une cannelure 301 d'engrènement avec une denture de couronne de pont (non représentée), un couple de rapports constitué du rapport de marche arrière 310 composé d'une denture d'engrènement 311 avec le pignon fixe 102, d'un fût 312 et d'un flasque rapporté 320, et du rapport de première 350 composé d'une denture d'engrènement 351 avec le pignon fixe 103 et d'un fût 352. Entre ces deux pignons sont intercalés un moyeu 330 lié en rotation à l'arbre secondaire 300 par des cannelures, maintenu axialement par les anneaux d'arrêt 331et possédant un cannelure extérieure sur laquelle coulisse un manchon de crabotage 335.

Le couplage du pignon fou de marche arrière est réalisé par le déplacement axial vers la droite du manchon de crabotage 325, à la rencontre des dents extérieures 321 du flasque 320 rapporté sur le pignon de marche arrière. Un anneau de synchronisation 325 et un dispositif d'armement 326, représenté sous la forme d'un jonc sont intercalé entre le moyeu 330 et le cône mâle 322 du flasque 320.

Avec ce dispositif, l'engagement de la marche arrière peut être obtenu sans choc et sans bruit en toutes circonstances.

Le couplage du pignon fou première est réalisé par le déplacement axial vers la gauche du manchon de crabotage 325, à la rencontre des dents extérieures 341 du manchon 340 rapporté sur la roue libre 360 et composé d'une bague extérieure 361, de galets 362 et des cages 363. Cette roue libre repose sur la bague intérieure 353 montée sur le fût 352 du pignon 350. Un anneau de synchronisation et un dispositif d'armement (non représentés) peuvent être intercalé entre le moyeu 330 et le manchon de crabotage 325 qui comporterait alors en plus un cône de friction mâle coopérant avec l'anneau de synchronisation. Avec ce dispositif, l'engagement du rapport de première peut être obtenu sans choc et sans bruit en toutes circonstances. Le pignon de première est maintenu axialement par la rondelle 354 et l'anneau d'arrêt 355.

Vers la gauche, sur l'arbre secondaire 300, sont successivement rapportés, les pignons fixes des rapports de troisième 400, cinquième 410, quatrième 420 et enfin de deuxième 430 . Ils engrènent respectivement avec les pignons fous de troisième110, cinquième 120, quatrième 150 et enfin de deuxième 155 portés par l'arbre primaire 100. Il sont positionnés axialement à l'aide d'entretoises 440 et 441.

Conformément à l'invention, tous les changements de rapport de la boîte ne sont pas identiques. Le passage de seconde en troisième s'effectue sous couple, de la manière suivante. En deuxième, le pignon 155 est couplé à l'arbre primaire 100 par son anneau de couplage. L'action de passer en troisième consiste à coupler progressivement le pignon 130 à l'arbre primaire 100 à l'aide de son coupleur dédié en agissant sur le baladeur 170. Cette action déleste en couple le rapport de deuxième. Lorsque le délestage complet est atteint, le baladeur libère le coupleur du pignon de seconde . L'accouplement du pignon de troisième se poursuit par maintien de la pression appliquée par le baladeur 170 qui permet l'égalisation des vitesses du pignon et de l'arbre primaire, puis la transmission du couple moteur.

Les autres passages montants, c'est-à-dire troisième/quatrième, et quatrième/cinquième peuvent s'effectuer de la même façon.

Pour le passage de première à seconde, on agit seulement sur le baladeur 170 du pignon de seconde. Le délestage du pignon de première est automatique en raison de la présence de la roue libre. On obtient le retour en première par libération du pignon de seconde, le transfert du couple vers le rapport de première est alors automatique.

L'engagement des rapports de première et de marche arrière, à partir du point mort, sont obtenus , comme dit précédemment par le déplacement commandé manuellement du baladeur 335 vers l'un ou l'autre des deux pignons fous.

Le procédé de commande faisant l'objet de l'invention présente un avantage certain sur le plan de la sûreté de fonctionnement. En effet, dans la mesure ou une partie de la commande est manuelle et l'autre partie automatisée.

Comme on l'aura compris, le pignon fou du premier rapport de marche avant est maintenu accouplé sur tous les autres rapports de marche avant.

Ainsi l'engagement du premier rapport de marche avant peut être interprété par le calculateur comme une simple intention de rouler en marche avant.

De nombreux cas de défaillances des actionneurs ou de leur commande n'entraînent pas l'immobilisation totale du véhicule comme sur les boîtes robotisées conventionnelles.

Enfin, bien que la description ci-dessus porte sur une boîte de vitesses à un seul arbre secondaire, l'invention s'applique également à des boîtes de vitesses présentant une architecture différente, notamment à deux arbres secondaires.

## Revendications

1. Boîte de vitesses à arbres parallèles comprenant un arbre primaire (100) et au moins un arbre secondaire (300) supportant plusieurs dentures fixes (102, 103, 400, 410, 420, 430), et plusieurs pignons fous (350, 155, 110, 150, 310, 120) qui engrènent avec ces dernières et qui peuvent être liés en rotation avec leur arbre par des moyens d'accouplement lors de l'engagement d'une vitesse, **caractérisée en ce que** les moyens d'accouplement (325) d'au moins un pignon fou sont fixés à la périphérie d'une roue libre (360).

2. Boîte de vitesses selon la revendication 1, **caractérisée en ce que** les moyens d'accouplement (325) du pignon fou du premier rapport de marche avant (350) sont fixés à la périphérie d'une roue libre (360).

3. Boîte de vitesses selon la revendication 1 ou 2, **caractérisée en ce que** les pignons fous du premier rapport de marche avant et du rapport de marche arrière (350, 310) sont placés en vis-à-vis sur le même arbre

4. Boîte de vitesses selon la revendication 3, **caractérisée en ce que** les pignons fous du premier rapport de marche avant et du rapport de marche arrière (350, 310) sont portés par un arbre secondaire (300).

5. Boîte de vitesses selon l'une des revendications précédentes, **caractérisée en ce que** le pignon fou du deuxième rapport de marche avant (155) est porté par l'arbre primaire (100).

6. Boîte de vitesses selon l'une des revendications précédentes, **caractérisée en ce que** les pignons fous du deuxième et du quatrième rapport de marche avant (155, 150) sont placés en vis-à-vis sur le même arbre

7. Boîte de vitesses selon l'une des revendications précédentes **caractérisée en ce que** les pignons fous du deuxième et du quatrième rapport de marche avant (155, 15à) sont portés par l'arbre primaire (100).

8. Boîte de vitesses selon l'une des revendications précédentes, **caractérisée en ce que** les pignons fous du troisième et du cinquième rapport de marche avant (110, 120) sont placés en vis-à-vis sur le même arbre

9. Boîte de vitesses selon l'une des revendications précédentes, **caractérisée en ce que** les pignons fous du troisième et du cinquième rapport de marchant (110, 120) sont portés par l'arbre primaire (100).

10. Boîte de vitesses selon l'une des revendication précédentes, **caractérisée en ce qu**'elle comporte quatre descentes d'engrenages constituées d'un pignon fou et d'un pignon fixe, associées par groupe de deux à des moyens de couplage communs et agencées de manière que les deux rapports commandés par chaque groupe de deux descentes ne soient pas de rang successif

11. Procédé de commande des changements de rapports d'une boîte de vitesses conforme à l'une des revendications précédentes, **caractérisé en ce que** l'engagement du premier rapport de marche avant et celui du rapport de marche arrière sont commandés manuellement, tandis que l'engagement des autres rapports de marche avant est assuré par des actionneurs pilotés par une unité de contrôle des passages de vitesses.

12. Procédé de commande des changements de rapports d'une boîte de vitesses conforme à l'une des revendications 1 à 10, **caractérisé en ce que** l'engagement de tous les rapports est assuré par des actionneurs pilotés par une unité de contrôle de passage des vitesses.

13. Procédé de commande selon la revendication 11 ou 12, **caractérisé en ce que** le pignon fou du premier rapport de marche avant (350) est maintenu accouplé sur les autres rapports de marche avant.

14. Procédé de commande selon la revendication 11, 12 ou 13, **caractérisée en ce** l'engagement du premier rapport de marche avant est considéré par l'unité de contrôle comme une intention de rouler en marche avant.

15. Procédé de commande selon l'une des revendications 11 à 14, **caractérisée en ce** les passages du premier au second rapport et du second au premier rapport de marche avant s'effectuent en sollicitant uniquement les moyens d'accouplement du second rapport de marche avant.

16. Procédé de commande selon l'une des revendications 10 à 15 **caractérisée en ce** les moyens d'accouplement des pignons fous du second et du quatrième rapport de marche avant (155, 150) et ceux du troisième et du cinquième rapport de marche avant (110, 120) sont sollicités simultanément pour réaliser les passages seconde/troisième, troisième/quatrième et quatrième/cinquième sous couple.

## Claims

1. Gearbox with parallel shafts comprising a primary shaft (100) and at least one secondary shaft (300) supporting several fixed gear wheels (102, 103, 400, 410, 420, 430), and several idle gears (350, 155, 110, 150, 310, 120) which mesh with the fixed gear wheels and which can be rotationally coupled with their shaft by coupling means when a gear is engaged, **characterized in that** the coupling means (325) of at least one idle gear are mounted on the outer edge of a free wheel (360).

2. Gearbox according to Claim 1, **characterized in that** the coupling means (325) of the idle gear of the first forward gear (350) are mounted on the outer edge of a free wheel (360).

3. Gearbox according to Claim 1 or 2, **characterized in that** the idle gears of the first forward gear and the reverse gear (350, 310) are placed facing each other on the same shaft.

4. Gearbox according to Claim 3, **characterized in that** the idle gears of the first forward gear and the reverse gear (350, 310) are carried by a secondary shaft (300).

5. Gearbox according to one of the preceding claims, **characterized in that** the idle gear of the second forward gear (155) is carried by the primary shaft (100).

6. Gearbox according to one of the preceding claims, **characterized in that** the idle gears of the second and the fourth forward gears (155, 150) are placed facing each other on the same shaft.

7. Gearbox according to one of the preceding claims, **characterized in that** the idle gears of the second and the fourth forward gears (155, 150) are carried by the primary shaft (100).

8. Gearbox according to one of the preceding claims, **characterized in that** the idle gears of the third and the fifth forward gears (110, 120) are placed facing each other on the same shaft.

9. Gearbox according to one of the preceding claims, **characterized in that** the idle gears of the third and the fifth forward gears (110, 120) are carried by the primary shaft (100).

10. Gearbox according to one of the preceding claims, **characterized in that** it includes four step down gearsets consisting of one idle gear and one fixed gear, connected in groups of two with coupling means which are shared and arranged so that the two gears controlled by each group of two gearsets are not consecutive.

11. Method for controlling gear changes in a gearbox according to one of the preceding claims, **characterized in that** the engagement of the first forward gear and that of the reverse gear are controlled manually, while the engagement of the other forward gears is provided by actuators managed by a gear change control unit.

12. Method for controlling gear changes in a gearbox according to one of Claims 1 to 10, **characterized in that** the engagement of all the gears is provided by actuators managed by a gear change control unit.

13. Control method according to Claim 11 or 12, **characterized in that** the idle gear of the first forward gear (350) is kept coupled to the other forward gears.

14. Control method according to Claim 11, 12 or 13, **characterized in that** the engagement of the first forward gear is interpreted by the control unit as a decision to drive forward.

15. Control method according to one of Claims 11 to 14, **characterized in that** the changes from the first to the second gear and from the second to the first forward gear are carried out using only the coupling means of the second forward gear.

16. Control method according to one of Claims 10 to 15, **characterized in that** the coupling means of the idle gears of the second and the fourth forward gears (155, 150) and those of the third and the fifth forward gears (110, 120) are used simultaneously to carry out the second-third, third-fourth and fourth-fifth changes under power.

## Patentansprüche

1. Getriebe mit parallelen Wellen, umfassend eine primäre Welle (100) und mindestens eine sekundäre Welle (300), die mehrere ortsfeste Verzahnungen (102, 103, 400, 410, 420, 430) stützen, und mehrere Winkelzahnräder (350, 155, 110, 150, 310, 120), die mit diesen letztgenannten ineinander greifen und die drehbar mit ihrer Welle durch Kopplungsmittel nach der Einlegung einer Drehzahl verbunden sein können, **dadurch gekennzeichnet, dass** die Kopplungsmittel (325) von mindestens einem Winkelzahnrad an der Peripherie eines Freilaufs (360) befestigt sind.

2. Getriebe nach Anspruch 1, **dadurch gekennzeichnet, dass** die Kopplungsmittel (325) des Winkelzahnrads des ersten Vorwärtsgangs (350) an der Peripherie eines Freilaufs (360) befestigt sind.

3. Getriebe nach Anspruch 1 oder 2, **dadurch gekennzeichnet, dass** die Winkelzahnräder des ersten Vorwärtsgangs und des Rückwärtsgangs (350, 310) einander gegenüberliegend auf der gleichen Welle angeordnet sind.

4. Getriebe nach Anspruch 3, **dadurch gekennzeichnet, dass** die Winkelzahnräder des ersten Vorwärtsgangs und des Rückwärtsgangs (350, 310) von einer sekundären Welle (300) getragen werden.

5. Getriebe nach einem der vorhergehenden Ansprüche, **dadurch gekennzeichnet, dass** das Winkelzahnrad des zweiten Vorwärtsgangs (155) von der primären Welle (100) getragen wird.

6. Getriebe nach einem der vorhergehenden Ansprüche, **dadurch gekennzeichnet, dass** die Winkelzahnräder des zweiten und des vierten Vorwärtsgangs (155, 150) einander gegenüberliegend auf der gleichen Welle angeordnet sind.

7. Getriebe nach einem der vorhergehenden Ansprüche, **dadurch gekennzeichnet, dass** die Winkelzahnräder des zweiten und des vierten Vorwärtsgangs (155, 150) von der primären Welle (100) getragen werden.

8. Getriebe nach einem der vorhergehenden Ansprüche, **dadurch gekennzeichnet, dass** die Winkelzahnräder des dritten und des fünften Vorwärtsgangs (110, 120) einander gegenüberliegend auf der gleichen Welle angeordnet sind.

9. Getriebe nach einem der vorhergehenden Ansprüche, **dadurch gekennzeichnet, dass** die Winkelzahnräder des dritten und des fünften Vorwärtsgangs (110, 120) von der primären Welle (100) getragen werden.

10. Getriebe nach einem der vorhergehenden Ansprüche, **dadurch gekennzeichnet, dass** es vier Abwärtsschalteinrichtungen umfasst, die aus einem Winkelzahnrad und einem ortsfesten Zahnrad bestehen, welche jeweils in Zweiergruppen mit gemeinsamen Kopplungsmitteln verbunden sind und derart platziert sind, dass die zwei Gänge, die von jeder Gruppe der beiden Abwärtseinrichtungen bedient werden, nicht aufeinander folgen.

11. Verfahren zur Steuerung der Gangschaltungen eines Getriebes gemäß einem der vorhergehenden Ansprüche, **dadurch gekennzeichnet, dass** das Einlegen des ersten Vorwärtsgangs und des Rückwärtsgangs manuell gesteuert werden, während das Einlegen der anderen Vorwärtsgänge durch Betätigungselemente, die von einer Steuereinheit der Drehzahldurchläufe geführt werden, gewährleistet wird.

12. Verfahren zur Steuerung der Gangschaltungen eines Getriebes gemäß einem der Ansprüche 1 bis 10, **dadurch gekennzeichnet, dass** das Einlegen aller Gänge durch Betätigungselemente, die von einer Steuereinheit der Drehzahldurchläufe geführt werden, gewährleistet wird.

13. Verfahren zur Steuerung nach Anspruch 11 oder 12, **dadurch gekennzeichnet, dass** das Winkelzahnrad des ersten Vorwärtsgangs (350) auf die anderen Vorwärtsgänge gekoppelt gehalten wird.

14. Verfahren zur Steuerung nach Anspruch 11, 12 oder 13, **dadurch gekennzeichnet, dass** das Einlegen des ersten Vorwärtsgangs von der Steuereinheit als Absicht, vorwärts zu fahren, befunden wird.

15. Verfahren zur Steuerung nach einem der Ansprüche 11 bis 14, **dadurch gekennzeichnet, dass** die Durchläufe vom ersten zum zweiten Vorwärtsgang und vom zweiten zum ersten Vorwärtsgang durchgeführt werden, indem lediglich die Kopplungsmittel des zweiten Vorwärtsgangs betätigt werden.

16. Verfahren zur Steuerung nach einem der Ansprüche 10 bis 15, **dadurch gekennzeichnet, dass** die Kopplungsmittel der Winkelzahnräder des zweiten und des vierten Vorwärtsgangs (155, 150) und des dritten und fünften Vorwärtsgangs (110, 120) gleichzeitig betätigt werden, um die Durchläufe zweiter/dritter, dritter/vierter und vierter/fünfter unter Kopplung durchzuführen.
